# EUROPEAN PATENT SPECIFICATION

(11) **EP 1 505 010 B1**
(45) Date of publication and mention of the grant of the patent: **21.03.2007**
(21) Application number: 04077242.8
(22) Date of filing: 05.08.2004
(51) Int. Cl.: B65G 1/14

(54) **Automated structure for storing and handling products with columns having retractable shelf members**
Automatisierte Struktur für die Speicherung und die Behandlung der Produkte mit den Spalten, die einziehbare Regalmitglieder haben
Structure automatisée pour stocker et manipuler des produits avec des colonnes ayant les membres escamotables d'étagère

(30) Priority: 07.08.2003 IT MI20031629
(43) Date of publication of application: 09.02.2005
(73) Proprietor: Ferrinox di Alberto Violante, 27020 Gravellona Lomellina (PV) (IT)
(72) Inventor: Violante, Alberto, 27020 Gravellona Lomellina (PV) (IT)
(74) Representative: Riccardi, Sergio

(56) References cited:
- EP-A- 0 613 837
- EP-A- 0 878 416
- DE-U- 20 307 164
- DE-U- 29 906 366

## Description

The present invention is about an automated structure for storing and handling products with columns having retractable shelf members according to the preamble of claim 1.

As it is known, in many industrial processes the products in their different working cycles, like components to be subsequently used in an assembly line, should be stored to make easier the handling from one cycle to another, to the warehouses and subsequently to the assembly line. For example, we make reference to the assembly lines of motor-car industry and to all the industrial fields where it is necessary to store and then handle a large number of identical components.

Especially for some kinds of products, the problem to obtain a safe but mostly rapid and effective storage takes place, in order to avoid any damage to said products, especially if fragile and/or flexible, by using robots for handling the products on the storing structures. The present invention solves such inconveniences, allowing to store the products in a rapid way, without requiring manual intervention, and providing for a perfect interface with the robots which perform their handling.

EP 0 613 837 discloses automatic storage system for semi finished products composed by a set of columns. Each column contains shelf member upright array disposed to support the semi finished products arranged in a stack way. Thanks to column design once a shelf member is fully outward, the next upper shelf member remains in intermediate position such that it can offer, in that specific position, the same supporting surface as it can do in horizontal position. Every idle shelf member is free to rotate back to the column about a horizontal pivot axis such that there is enough space to handle semi finished product on the top of the stack. The shelf members are connected each other by mean of mechanic link members that allow shelf members to move outward sequentially when a new semi finished product is loaded on. Shelf member back rotation is due to a torsion spring coaxial with the pivot axis of the related shelf member, so that operation of the whole system is granted only if every torsion spring works properly. In the present invention, instead, back rotation of the shelf members is granted by a counterweight formed together with the same shelf member, whilst a linear spring engaged between each shelf member outer portion and column side wall allows a faster reciprocate movement of the idle shelf member. In such an embodiment the spring arrangement in the structure makes easier maintenance because replacement of a damaged spring can be done quickly, without removing all column component parts as it would be necessary in '837. Moreover, in the present invention a greater level of reliability is obtained by less stressed springs than in '837, because the springs cooperate with counterweights in back rotating shelf members.

The storing structure according to the present invention is described in claim 1.

Advantageously, the connection means between the shelf members allow to automatically obtain either the horizontal operative position, overhanging on the open part of the section, when a product is disposed on the shelf member, or an intermediate position, ready for storing products, with semi-lowered position of the shelf member which partially protrudes from the column, or the almost vertical rest intermediate joints comprise arms consisting of sections of inner shape and dimensions corresponding to the outer shape and dimensions of the bars. In a particular embodiment, in the angular joints the arm assigned to assume the vertical direction is prolonged downward to act as a foot.

Each shelf member is obtained from a substantially rectangular oblong plate which comprises an almost rectangular beat nib on the bottom of its rear portion, the latter being on a slightly raised plane with respect to that of the front portion, while two tangs of substantially rectangular shape are provided on both sides of said rear portion, able to allow the bearing of the shelf member inside the channel section which contains it. A protrusion is obtained on a single side on the connection plate between the front and the rear portion of the shelf member, having at its end a cavity for hooking an elastic element, like for instance a metal spring.

According to a further embodiment, the shelf member is obtained by a plane plate coming from a single die, said plane plate being subsequently wrought in order to obtain, on the rear portion of said shelf member, the overlapping of one or more parts of the plate, with counterweight function as well as beat nib, while the two tangs of substantially rectangular shape are provided on both sides of said shelf member, able to allow the bearing of the shelf member inside the channel section which contains it, in addition to the side protrusion, even obtained on a single side, suitable for the hooking of a metal rod for dragging and joining the different shelf members.

The channel section which houses the plurality of shelf members has, at the side tangs of each shelf member, a slot - groove pair, said slot being of substantially circular shape and said groove being of substantially rectangular shape with semicircular inner portion of the same diameter with respect to the corresponding slot, of which slot - groove pair the slot is disposed on a side panel of the section, while the groove is disposed on the opposite side panel. Said channel section is furthermore provided with as many rear vertical holes of almost rectangular shape, placed on the back of said section, as the shelf members are present on said section. Advantageously, the rear holes are trapezoidal, with shorter base high above, to allow an eventual transversal oscillation of the shelf members during their movement and to contemporarily grant the blocking and the full stability of said shelf members when they are in horizontal position, i.e. when the beat nib leans on said shorter base of the rear hole. The two side tangs of each shelf member are respectively inserted inside the slot and the groove of each slot - groove pair.

On the side of the channel section having the plurality of grooves for the shelf members support, a plate is externally mounted, having substantially similar shape and dimension to the section's side on which it is mounted, provided at each groove, according to a first embodiment, with a proper slot of almost circular shape and the same diameter of the corresponding slot placed on the opposite side of the section, said plate slot comprising a couple of cusp shaped protuberances, properly disposed in order to engage the tang placed in the side portion of each shelf member and to obtain the blockage in horizontal position of said shelf member in its operative position. On the rear edge of the plate, at the rear wall of the more internal channel section, a series of cavities for hooking an elastic element, in equal number with respect to the corresponding hooking cavities present on each shelf member, is provided.

A second and simpler executive embodiment of the side plate provides for the presence, at each groove of the channel section, of an opposite groove able to form, together with the channel section groove and with the help of a bush, a slot for the insertion of the tangs present on each shelf member.

According to the invention, each shelf member is connected to the immediately adjacent shelf members, the upper one and the lower one, by means of rectangular shaped chain links, with semicircular short sides, able to engage each shelf member at each side protrusion of said shelf member. Advantageously, a metal spring is present for each shelf member, said spring being respectively connected to the hooking cavity placed on each shelf member's side and to the hooking cavity placed on the rear edge of the plate, and allowing each shelf member, when no more loaded with any component, to gradually and automatically return in its vertical position, said spring contemporarily operating with the chain links which connect the shelf members.

According to an embodiment, the connection between the shelf members is obtained using metal rods, provided with slots in which the side protrusion of said shelf members are inserted. The upper slot is of circular shape, while the lower slot has substantially rectangular elongated shape and it is suitable for having the function of connection and dragging of the shelf members. Said metal rods are clamped by a clip disposed in a proper hooking cavity obtained on the side protrusions of the shelf members. The counterweight present on the rear portion of said shelf members has the function of automatic reverse from the operative position to the intermediate position or from the intermediate position to the rest position, according to the load present or not on said shelf members, always contemporarily operating with the connection metal rods.

Characteristics and objects of the present invention will be better highlighted in the following description of executive embodiments, with reference to the annexed drawings wherein:
Figure 1 is a perspective view of a structure composed by four vertical sections forming eight columns;
Figure 2 is an exploded view of a shelf members' column according to the invention, with its main components;
Figure 3 is a perspective view of the shelf members' column according to the invention, in which one can see the different shelf members in all the possible allowed positions;
Figure 4 is a perspective enlarged view of one of the shelf members, according to the invention;
Figure 5 is an exploded view of a shelf members' column according to an embodiment, with its main components;
Figure 6 shows a detail of the shelf members' column according to an embodiment, illustrating its working;
Figure 7 is an enlarged perspective view of the elements which form a shelf member, according to an embodiment; and
Figure 8 is a perspective enlarged view of one of the shelf members, according to an embodiment.

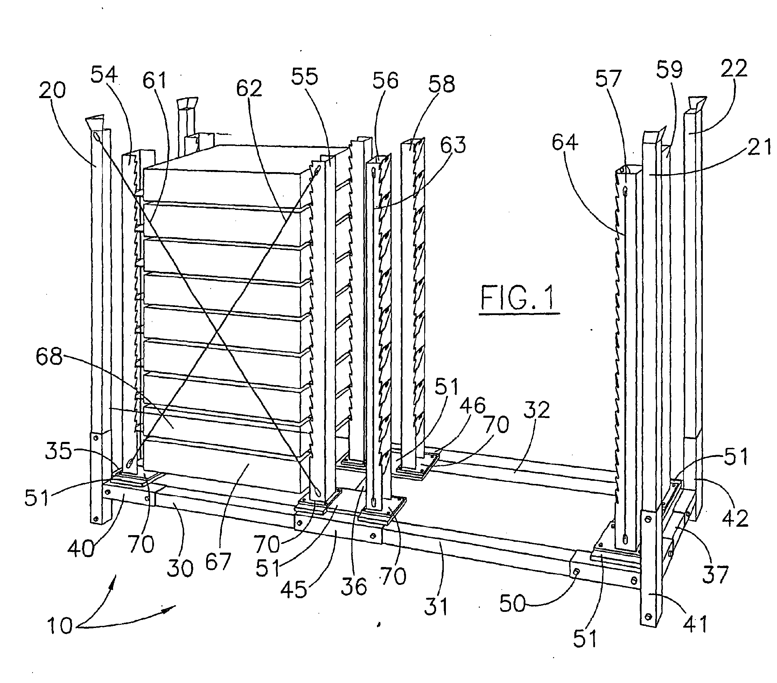

The structure 10 comprises four vertical sections as 20-22, four horizontal longitudinal sections as 30-32 and three transversal sections as 35-37. The sections have square section and they are connected on the corners in the three space directions by three spokes joints as 40-42 and in the middle by T-shaped joints as 45-46. The connections are made steady by means of bolts 50. Advantageously, said structure 10 comprises, at its ends and in the middle, slabs 51 for supporting the substantially identical shelf members' columns 54-59. The columns may be stiffened in pairs by tension wires as 61-64. On the left side of Figure 1 the tension wires 61 and 62 are in operative position, crossed on the columns 54 and 55. On the right side the tension wires 63 and 64 are fastened to the respective columns 56 and 57, waiting for being connected with the opposite column.

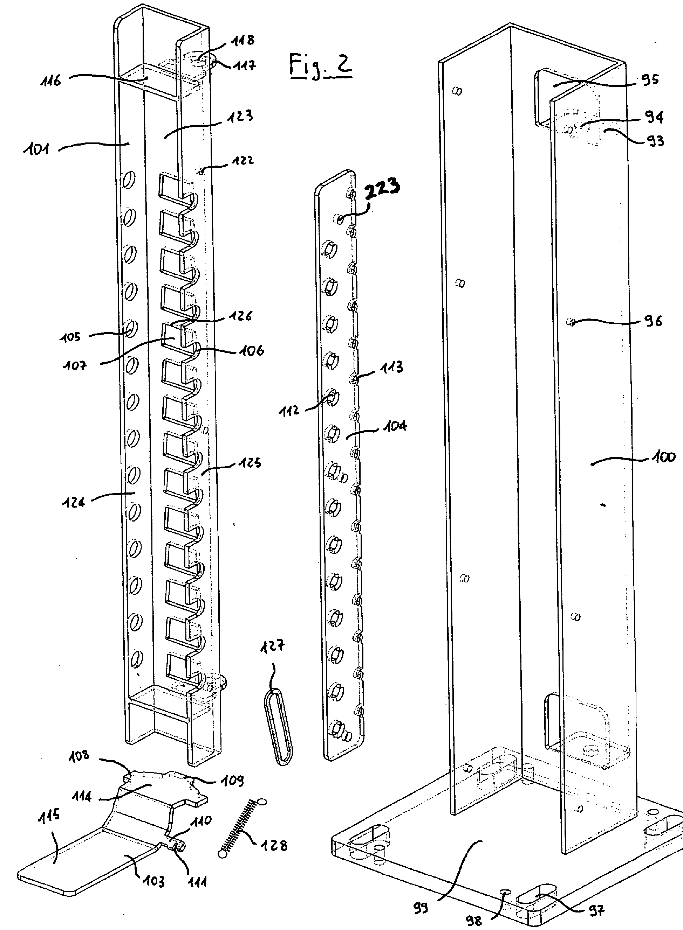

Figure 2 shows a column as 54-59 according to the present invention. Said column is formed by a channel section 100 having its lower end welded to a bearing plate 99, with holes as 97-98 to be fixed, according to the needing, to the floor or to support structures. On the rear wall of said section 100 two substantially rectangular plates 93, provided with a circular hole 94, are obtained. A channel section 101 is fixed inside said section 100, by means of bolts, through the holes 96. Said channel section 101 comprises a back 123 and two opposite sides 124 and 125. On said side 124 a series of slots 105 is disposed, in pairs with a series of grooves 106 disposed on said opposite side 125. On said back 123 a series of trapezoidal holes 107, with shorter base 126 high above, is provided.

On the side 125 of the channel section 101 a plate 104 is externally mounted, fixed by means of bolts which correspondently engage the holes 122 of said section 101 and the holes 223 of said plate 104. The plate 104 is provided, at each groove 106 of the section 101, with a series of slots 112 and a series of cavities 113 for hooking a spring.

Each column can support a series of shelf members 103. The number of said elements, slots 105, grooves 106, slots 112, hooking cavities 113 and shelf members 103 is the same.

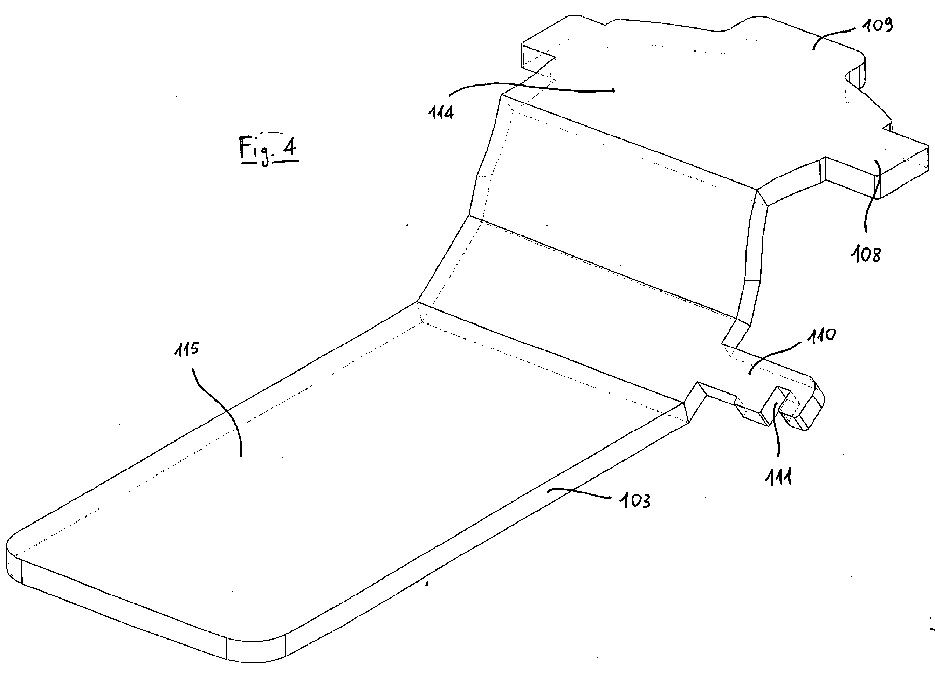

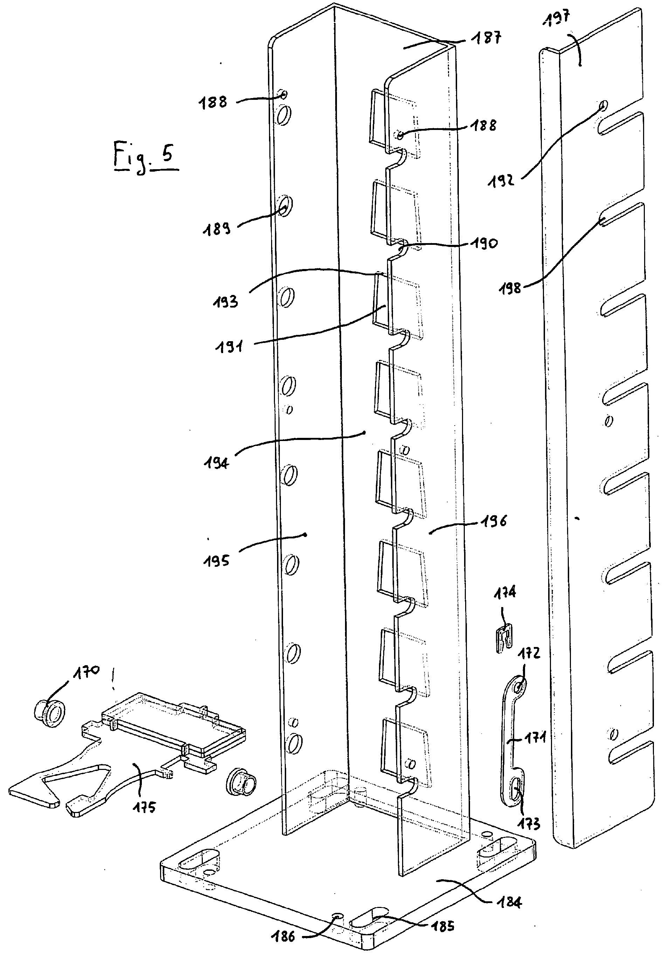

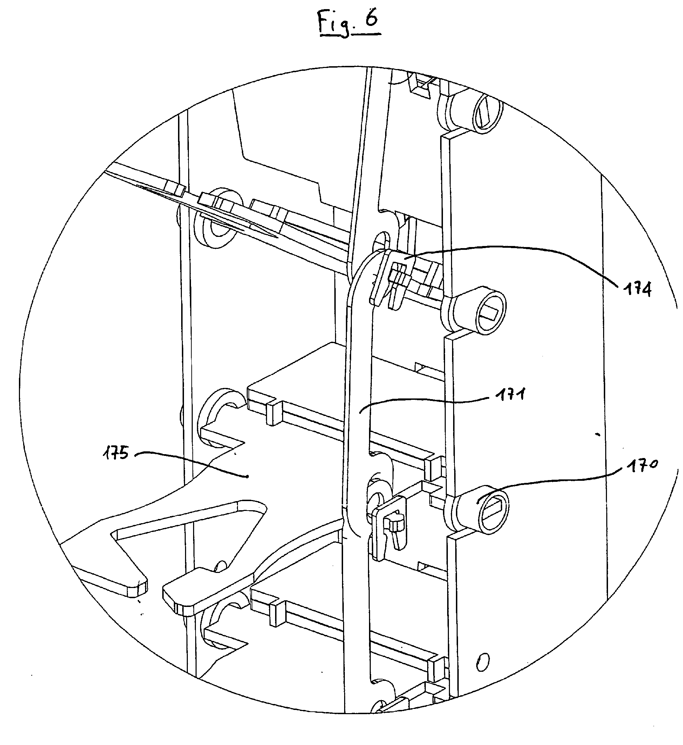

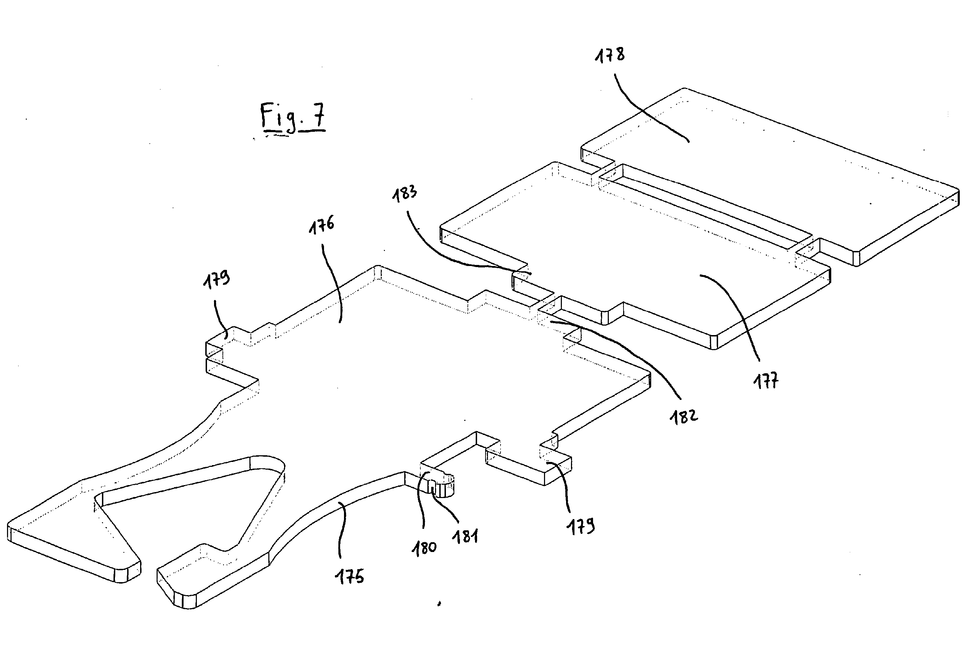

With reference to Figure 4 each shelf member 103 comprises an almost rectangular beat nib 109 on the bottom of its rear portion, while two tangs 108 of substantially rectangular shape are provided on both sides of said rear portion 114, respectively engaging the slots 105 of the section 101 and, through the grooves 106 of said section 101, the slots 112 of the plate 104. A protrusion 110 is obtained on a single side of the connection plate between the front portion 115 and the rear portion 114 of the shelf member 103, having at its end a cavity 111 for hooking a metal spring. Each shelf member 103 is connected to the immediately adjacent shelf members by means of rectangular shaped chain links 127, with semicircular short sides, able to engage each shelf member 103 at each side protrusion 110. A metal spring 128 is present for each shelf member 103, said spring 128 being respectively connected to the hooking cavity 111 of the shelf member 103 and to the hooking cavity 113 placed on the rear edge of the plate 104.

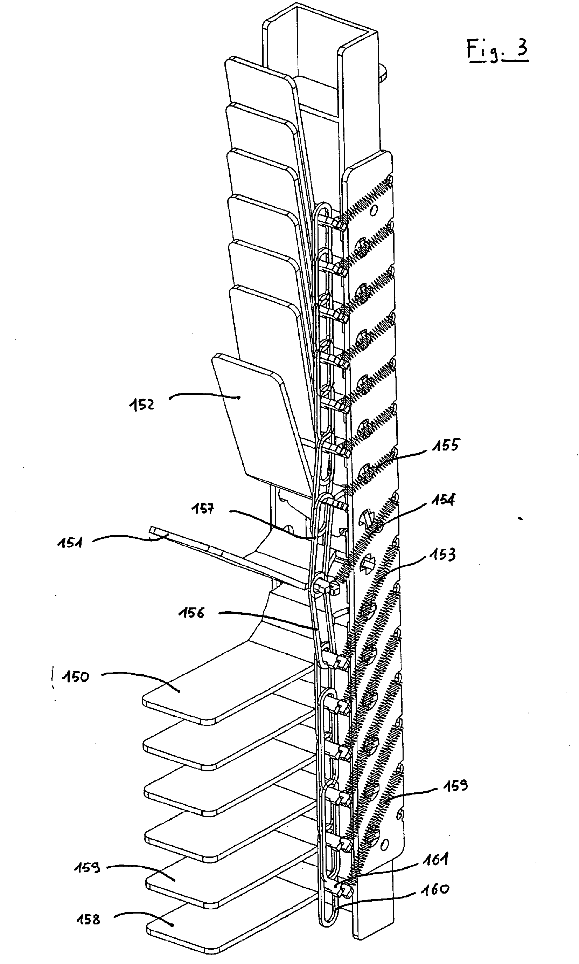

From the foregoing description, with reference to Figure 3, in view of the combined action of the chain links 156, 157 with the springs 153-155, three possible positions are provided for the shelf members 150-152, respectively an operative position, such as the shelf member 150, an intermediate position, such as the shelf member 151, and a rest position, such as the shelf member 152. In the rest position of the whole storage structure, all the shelf members are maintained in vertical position by the relaxed spring 155, except for the shelf member 158 placed at the bottom of the whole column, said shelf member 158, because of the chain link 160 which engages it by means of the protrusion 161, being maintained in the intermediate position. When a product to be stored is placed on said shelf member 158, which is in intermediate position, the weight of said product causes the extension of the spring 159 and the lowering of the shelf member 158, which is blocked in horizontal or operative position by the leaning of the beat nib 109 (Figure 2) on the shorter base 126 (Figure 2) of the trapezoidal hole 107 (Figure 2). The protrusion 161 present on one side of the shelf member 158, when said shelf member is brought in horizontal position, drags downward the link 160 which allows the lowering, from the rest position to the intermediate position, of the immediately overhanging shelf member 159. When a product is removed from the storage structure, the shelf member on which said product was placed, lacking the weight loaded on said shelf member, is raised due to the relaxation of the related spring (such as the spring 154) and it is blocked in its intermediate position (such as the shelf member 151) by the lower link 156 that engages it. As a consequence, the immediately overhanging shelf member (such as the shelf member 152) is driven from the intermediate position to the rest position because of the total relaxation of the related spring (such as the spring 155), since the chain link 157 that engages said shelf member 152 does not interfere with the action of said spring 155.

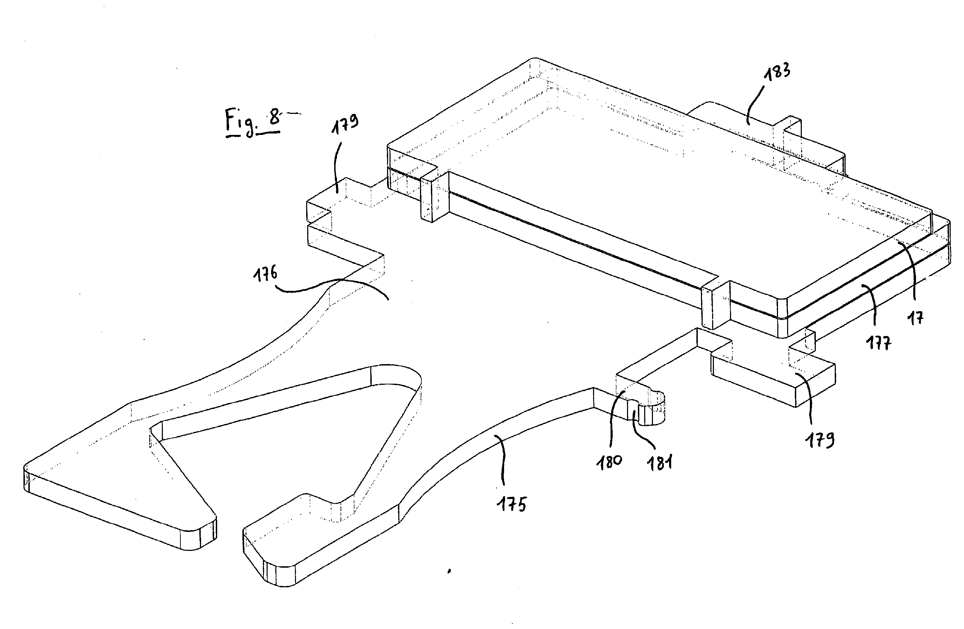

In Figure 5 a column as 54-59, according to an embodiment of the present invention, is shown. Said column is obtained by a single channel section 187 having its lower end welded to a bearing plate 184, with holes as 185-186, to be fixed, according to the needing, to the floor or to support structures. Said channel section 187 comprises a back 194 and two opposite sides 195 and 196. On said side 195 a series of slots 189 is disposed, in pairs with a series of grooves 190 disposed on said opposite side 196. On said back 194 a series of trapezoidal holes 191, with shorter base 193 high above, is provided.

On the side 196 of the channel section 187 a plate 197 is externally mounted, fixed by means of bolts which correspondently engage the holes 188 of said section 187 and the holes 192 of said plate 197. The plate 197 is provided, at each groove 190 of the section 187, with a series of slots 198, said grooves 190 being coupled with said grooves 198 in order to form a housing slot for a bush 170, made of stainless steel, said bush 170 being also used inside each slot 189. Advantageously, the use of a high resistance material, like stainless steel, for the manufacture of the bushes 170 allows to employ, for the channel section, a material without high resistance features, such as iron, thus being considerably cheaper.

Each column, according to this embodiment, can support a series of shelf members 175. The number of said elements, slots 189, grooves 190, slots 198 and shelf members 175 is the same, while the number of bushes 170 with respect to said elements is double.

With reference to Figures 7 and 8, conceming this embodiment, each shelf member 175 is obtained by a plane plate coming from a single die, said plane plate being subsequently wrought in order to obtain, on the rear portion of said shelf member, the overlapping of two parts 177 and 178 of the plate, with counterweight function, comprising the two tangs 182 and 183, with beat nib function. On both sides of the front portion 176, substantially plane and shaped according to the products storing requirements, of said shelf member two tangs 179 of rectangular shape are provided, able to allow the bearing of the shelf member inside the bushes 170, in addition to the side protrusion 180, obtained on a single side of said front portion 176, suitable for the hooking of the metal rod 171 shown in Figure 5. Laterally on said side protrusion 180 two fissures 181 are obtained, allowing the insertion of a clip 174, shown in Figure 5, which performs the clamping of the rods 171.

Similarly to the present invention, and with reference to the detail shown in Figure 6, three possible positions are provided for the shelf members 175, respectively an operative position, an intermediate position and a rest position. In the rest position of the whole storage structure all the shelf members are maintained in vertical position by the action of the counterweight formed by the elements 177 and 178, except for the shelf member placed at the bottom of the whole column, said shelf member being maintained in the intermediate position because of the action exerted by the rod 171 on said shelf member. The weight of a product placed on a shelf member which is in intermediate position causes the lowering in horizontal or operative position of said shelf member, by the leaning of the beat nib 182, 183 on the shorter base 193 (Figure 5) of the trapezoidal hole 191 (Figure 5), contemporarily obtaining the lowering of the subsequent shelf member from the rest position to the intermediate position, thanks to the action of the rod 171, it too dragged downward.

When a product is removed from the storage structure, the shelf member 175 on which said product was placed, lacking the weight loaded on said shelf member 175, is raised due to the action of the counterweight formed by the elements 177 and 178, and it is stopped in its intermediate position because of the action of the rod 171. The immediately overhanging shelf member is then brought back from the intermediate position to the rest position.

Stainless steel or other stainless materials can be advantageously used in the storing structure according to the present invention for all that components of the mechanism which have to operate without jams also in open places, while the use of less noble materials, such as iron, is sufficient for components of simple support and covering, with consequent decrease of costs and reduction of maintenance interventions.

The storing structure according to the present invention has been described, just in an illustrative but not limiting way, and to show its essential features. It is intended that numerous variation could be made to said storing structure according to the industrial, commercial and other necessities, as well as other systems and means could be included, without falling outside its scope of protection as described by the appended claims. As a consequence, for example, the particular shape of the shelf members and their size, the distance between said shelf members and their number, and the amount of used columns in the structure could be different from that shown in the drawings. Therefore, it should be intended that any equivalent application of the concepts and any equivalent product manufactured and/or operating have to be included in this patent, according to one or more features contained in the appended claims.

## Claims

1. An automated structure (10) for storing and handling products, comprising a plurality of square sectional tubular sections connectable at will by angular joints (40-42) and T-shaped intermediate joints (46) in a preferably parallelepiped configuration, adjustable in the three space directions, to support, by possible base slabs (51), a plurality of columns (54-59) each formed by a channel section (100) arranged for housing a plurality of shelf members (103); said columns (54-59) being preferably stiffened, in opposite pairs, by crossed tension wires (61-64), said channel section (100) comprising at least a slot (105) - groove (106) pair for each of said shelf members (103), said slot (105) of substantially circular shape and said groove (106) of substantially rectangular shape, with semicircular inner portion of the same diameter with respect to the corresponding slot (105), of which slot (105) - groove (106) pair the slot (105) is disposed on a side panel of the section, while the groove (106) is disposed on the opposite side panel; said channel section (100) furthermore comprising as many rear vertical holes of trapezoidal shape (107), with shorter base high above, placed on the back of said section, as the shelf members (103) are present on said section; said shelf members (103):
• being disposed at progressive heights,
• being obtained from a substantially rectangular oblong plate,
• comprising an almost rectangular beat nib (109) on the bottom of the rear portion of said shelf members (103),
• being provided with two tangs (108) of substantially rectangular shape on both sides of said rear portion, able to allow the bearing and the movement of said shelf members (103) in said channel section (100);
• comprising mechanic connection means which allow their reciprocate movement, in sequence one after the other;
said mechanic connection means allowing to obtain in an automatic way, in the products loading stage, a horizontal or operative position of said shelf members (103), with the related product loaded, an intermediate position, ready for storing the subsequent product, with semi-lowered position of said shelf members (103) which partially protrude from the column, or the almost vertical rest position of said unloaded shelf members (103) inside the column, with said positions assumed in the inverted sequence in the products taking stage **characterized in that** said connection means comprise at least a metal spring (128) for each of said shelf members (103) and at least a rectangular shaped chain link (127), with semicircular short sides, able to engage each at least a couple of said mutually immediately adjacent shelf members (103).

2. The automated structure (10) for storing and handling products according to claim 1, **characterized in that** said connection means comprise at least a metal rod (171) able to engage at least a couple of said mutually immediately adjacent shelf members (103), said metal rod (171) comprising at least a circular shaped upper slot (172) and at least an elongated and substantially rectangular shaped lower slot (173).

3. The automated structure (10) for storing and handling products according to claim 1, **characterized in that** said shelf members (103) comprise, on a single side, a protrusion (110) suitable for hooking said chain link, and a cavity (111) for hooking said metal spring (128).

4. The automated structure (10) for storing and handling products according to claims 1 and 2, **characterized in that** said shelf members (103) are obtained by a plane plate coming from a single die, said plane plate being subsequently wrought in order to obtain, on the rear portion of said shelf member, the overlapping of one or more parts of the plate, with counterweight function, said shelf members (103) further comprising, on a single side, a protrusion suitable for hooking said metal rod.

5. The automated structure (10) for storing and handling products according to claims 1 and 3 **characterized in that** a plate (104) is externally mounted to said channel section (100), having substantially similar shape and dimension to said section's side on which it is mounted, provided at each groove of said section with a proper slot (112) of almost circular shape and the same diameter of the corresponding slot (105) placed on the opposite side of said section, said particular slot comprising a couple of cusp shaped protuberances, properly disposed in order to engage the tang placed in the side portion of each shelf member and to obtain the blockage in horizontal position of said shelf member in its operative position; said plate (104) being provided, on its rear edge, with a series of cavities (113) for hooking said metal spring (128), in equal number with respect to the corresponding hooking cavities present on each of said shelf members (103).

6. The automated structure (10) for storing and handling products according to claims 1, 2 and 4, **characterized in that** a plate (104) is externally mounted to said channel section (100), provided at each groove (106) of said channel section (100) with an opposite groove able to form, together with the groove (106) of said channel section (100), a slot for the insertion of the tangs (108) present on each of said shelf members (103).

7. The automated structure (10) for storing and handling products according to claim 6, **characterized in that** said channel section (100) comprises, for each of said slots (105), a bush (170) suitable for the insertion of the tangs (108) present on each of said shelf members (103).

8. The automated structure (10) for storing and handling products according to claim 7, **characterized in that** said bush (170) is made of stainless steel or other stainless material.

9. The automated structure (10) for storing and handling products according to claim 1, **characterized in that** said chain link (127) is made of stainless steel or other stainless material.

10. The automated structure (10) for storing and handling products according to claims 1 and 2, **characterized in that** said metal rod (171) is made of stainless steel or other stainless material.

## Patentansprüche

1. Automatisierte Struktur (10) zur Lagerung und Handhabung von Produkten mit mehreren quadratischen zerlegbaren rohrförmigen Abschnitten, die beliebig durch Winkelstücke (40-42) und T-förmige Zwischenstücke (46) in vorzugsweise parallelepipedischer Konfiguration verbindbar sind, die in den drei Raumrichtungen zum Halten, und zwar durch eventuelle Fundamentplatten (51), von mehreren Stützen (54-59), die jeweils durch ein U-Profil (100) gebildet werden, das zum Unterbringen mehrerer Regalelemente (103) angeordnet ist; wobei die Stützen (54-59) vorzugsweise in einander gegenüberliegenden Paaren durch gekreuzte Spanndrähte (61-64) versteift sind, wobei das U-Profil (100) zumindest ein Schlitz (105)/Nut (1 06)-Paar für jedes der Regalelemente (103) umfasst, der Schlitz (105) von im Wesentlichen kreisförmiger Form und die Nut (106) von im Wesentlichen rechteckiger Form ist, mit einem halbkreisförmigen inneren Abschnitt von demselben Durchmesser in Bezug auf den entsprechenden Schlitz (105), von welchem Schlitz (105)/Nut (106)-Paar der Schlitz (105) auf einem Seitenpaneel des Abschnitts angeordnet ist, während die Nut (106) auf dem gegenüberliegende Seitenpaneel angeordnet ist; wobei das U-Profil (100) weiterhin so viele rückwärtige vertikale Löcher von trapezoider Form (107) umfasst, hoch oben mit kürzerer Basis auf der Rückseite des Abschnitts platziert, wie in dem Abschnitt Regalelemente (103) vorhanden sind; wobei die Regalelemente (103):
• auf fortschreitenden Höhen angeordnet sind,
• aus einer im Wesentlichen rechteckigen länglichen Platte erhalten werden,
• eine fast rechteckige Stoßnase (109) an dem Boden des hinteren Abschnitts der Regalelemente (103) umfassen,
• mit zwei Zapfen (108) von im Wesentlichen rechteckiger Form auf beiden Seiten des hinteren Abschnitts versehen sind, die das Lagern und die Bewegung der Regalelemente (103) in dem U-Profil (100) ermöglichen können;
• mechanische Verbindungsmittel umfassen, die deren Hin- und Herbewegung eine nach der anderen der Reihe nach erlauben;
wobei es die mechanischen Verbindungsmittel erlauben, in der Produktladestufe auf automatische Weise eine horizontale oder funktionsbereite Position der Regalelemente (103) mit dem betreffenden geladenen Produkt, eine Zwischenposition, die zum Lagern des nachfolgenden Produkts bereit ist, mit halb-gesenkter Position der Regalelemente (103), die teilweise aus der Stütze hervorstehen, oder der fast vertikalen Ruheposition der unbeladenen Regalelemente (103) im Inneren der Stütze zu erhalten, wobei die in der umgekehrten Reihenfolge in der Produktübernahmestufe angenommenen Positionen **dadurch gekennzeichnet sind, dass** die Verbindungsmittel zumindest eine Metallfeder (128) für jedes der Regalelemente (103) und zumindest ein rechteckig geformtes Kettenglied (127), mit halbkreisförmigen kurzen Seiten, umfassen, die jeweils imstande sind, mit zumindest einem Paar von gegenseitig unmittelbar nebeneinander liegenden Regalelementen (103) in Eingriff zu treten.

2. Automatisierte Struktur (10) zur Lagerung und Handhabung von Produkten nach Anspruch 1,
**dadurch gekennzeichnet,**
**dass** die Verbindungsmittel zumindest eine Metallstange (171) umfassen, die imstande ist, mit zumindest einem Paar von gegenseitig unmittelbar nebeneinander liegenden Regalelementen (103) in Eingriff zu treten, wobei die Metallstange (171) zumindest einen kreisförmigen oberen Schlitz (172) und zumindest einen länglichen und im Wesentlichen rechteckig geformten unterem Schlitz (173) umfasst.

3. Automatisierte Struktur (10) zur Lagerung und Handhabung von Produkten nach Anspruch 1,
**dadurch gekennzeichnet,**
**dass** die Regalelemente (103) auf einer einzigen Seite einen Vorsprung (110), der zum Einhaken der Kettenverbindung geeignet ist, und eine Aussparung (111) zum Einhaken der Metallfeder (128) umfassen.

4. Automatisierte Struktur (10) zur Lagerung und Handhabung von Produkten nach Anspruch 1 oder 2,
**dadurch gekennzeichnet,**
**dass** die Regalelemente (103) durch eine ebene Platte, die von einer einzigen Schnittplatte stammt, erhalten werden, wobei die ebene Platte anschließend gehobelt wird, um auf dem rückwärtigen Abschnitt des Regalelements das Überlappen von einem oder mehreren Teilen der Platte mit einer Gegengewichtfunktion zu erhalten, wobei die Regalelemente (103) des Weiteren auf einer einzigen Seite einen Vorsprung umfassen, der zum Einhaken der Metallstange geeignet ist.

5. Automatisierte Struktur (10) zur Lagerung und Handhabung von Produkten nach Anspruch 1 und 3,
**dadurch gekennzeichnet,**
**dass** eine Platte (104) extern an dem U-Profil (100) angebracht ist, die eine im Wesentlichen ähnliche Form und Dimension wie die Seite des Abschnitts, an der sie angebracht ist, aufweist, die an jeder Nut des Abschnitts mit einem geeigneten Schlitz (112) von fast kreisförmiger Form und demselben Durchmesser des entsprechenden Schlitzes (105), der auf der gegenüberliegenden Seite des Abschnitts platziert ist, versehen ist, wobei der bestimmte Schlitz ein paar zackenförmiger Ausstülpungen umfasst, die entsprechend angeordnet sind, um mit dem im Seitenabschnitt jedes Regalelements platzierten Zapfen in Eingriff zu treten und die Blockierung in der horizontalen Position des Regalelements in seiner funktionsfähigen Position zu erhalten; wobei die Platte (104) an ihrer Hinterkante mit einer Reihe von Aussparungen (113) zum Einhaken der Metallfeder (128) in gleicher Zahl in Bezug auf die an jedem der Regalelemente (103) vorhandenen entsprechenden Einhakaussparungen versehen ist.

6. Automatisierte Struktur (10) zur Lagerung und Handhabung von Produkten nach Anspruch 1, 2 und 4,
**dadurch gekennzeichnet,**
**dass** eine Platte (104) extern an dem U-Profil (100) angebracht ist, die an jeder Nut (106) des U-Profils (100) mit einer gegenüberliegenden Nut versehen ist, die imstande ist, zusammen mit der Nut (106) des U-Profils (100) einen Schlitz für das Einfügen der an jedem der Regalelemente (103) vorhandenen Zapfen (108) zu bilden.

7. Automatisierte Struktur (10) zur Lagerung und Handhabung von Produkten nach Anspruch 6,
**dadurch gekennzeichnet,**
**dass** das U-Profil (100) für jeden der Schlitze (105) eine Buchse (107) umfasst, die für das Einfügen der an jedem der Regalelemente (103) vorhandenen Zapfen (108) geeignet ist.

8. Automatisierte Struktur (10) zur Lagerung und Handhabung von Produkten nach Anspruch 7,
**dadurch gekennzeichnet,**
**dass** die Buchse (170) aus rostfreiem Stahl oder einem anderen rostfreien Material hergestellt ist.

9. Automatisierte Struktur (10) zur Lagerung und Handhabung von Produkten nach Anspruch 1,
**dadurch gekennzeichnet,**
**dass** die Kettenverbindung (127) aus rostfreiem Stahl oder einem anderen rostfreien Material hergestellt ist.

10. Automatisierte Struktur (10) zur Lagerung und Handhabung von Produkten nach Anspruch 1 und 2,
**dadurch gekennzeichnet,**
**dass** die Metallstange (171) aus rostfreiem Stahl oder einem anderen rostfreien Material hergestellt ist.

## Revendications

1. Structure automatisée (10) pour le stockage de produits, comprenant une pluralité de sections tubulaires de section carrée connectables à volonté par des joints angulaires (40-42) et des joints intermédiaires en forme de T (46) dans une configuration de préférence en parallélépipède, réglable dans les trois directions spatiales, pour supporter, à l'aide de dalles de base éventuelles (51), une pluralité de colonnes (54-59) formée chacune d'une section de canal (100) disposée pour loger une pluralité d'éléments d'étagère (103); lesdites colonnes (54-59) étant de préférence rigidifiées, en paires opposées, par des fils de tension croisés (61-64), ladite section de canal (100) comprenant au moins une paire fente (105)-rainure (106) pour chacun desdits éléments d'étagère (103), ladite fente (105) de forme sensiblement circulaire et ladite rainure (106) de forme sensiblement rectangulaire, avec une portion interne semi-circulaire du même diamètre par rapport à la fente correspondante (105), alors que dans la paire fente (105) - rainure (106), la fente (105) est disposée sur un panneau latéral de la section tandis que la rainure (106) est disposée sur le panneau latéral opposé; ladite section de canal (100) comprenant en outre autant de trous verticaux arrière de forme trapézoïdale (107), avec une base plus courte très élevée, placée au dos de ladite section, que d'éléments d'étagère (103) présents sur ladite section ; lesdits éléments d'étagère (103) ;
• étant disposés à des hauteurs progressives,
• étant obtenus à partir d'une plaque oblongue sensiblement rectangulaire,
• comprenant un tenon martelé pratiquement rectangulaire (109) au fond de la portion arrière desdits éléments d'étagère (103),
• étant pourvus de deux tenons (108) de forme sensiblement rectangulaire des deux côtés de ladite portion arrière, permettant le support et le mouvement desdits éléments d'étagère (103) dans ladite section de canal (100) ;
• comprenant moyens de connexion mécaniques permettant leur mouvement de va-et-vient, en séquence, les uns après les autres ;
lesdits moyens de connexion mécaniques permettant d'obtenir de façon automatique, lors de la phase de chargement des produits, une position horizontale ou opérationnelle desdits éléments d'étagère (103), avec le produit associé chargé, une position intermédiaire, prête pour le stockage du produit suivant, avec une position semi abaissée desdits éléments d'étagère (103) faisant saillie partiellement de la colonne, ou bien la position de repos pratiquement verticale desdits éléments d'étagère déchargés (103) à l'intérieur de la colonne, avec lesdites positions adoptées dans la séquence inverse dans la phase de préhension des produits, **caractérisée en ce que** lesdits moyen de connexion comprennent au moins un ressort métallique (128) pour chacun desdits éléments d'étagère (103) et au moins un chaînon de forme rectangulaire (127), avec des côtés courts semi-circulaires, capables de s'engager chacun dans au moins un couple d'éléments d'étagère immédiatement adjacents l'un de l'autre (103).

2. Structure automatisée (10) permettant de stocker et de manipuler des produits selon la revendication 1, **caractérisée en ce que** lesdits moyen de connexion comprennent au moins une tige de métal (171) capables de s'engager dans au moins un couple d'éléments d'étagère immédiatement adjacents l'un de l'autre (103), ladite tige de métal (171) comprenant au moins une fente supérieure de forme circulaire (172) 172) et au moins une fente inférieure allongée et de forme sensiblement rectangulaire (173).

3. Structure automatisée (10) permettant de stocker et de manipuler des produits selon la revendication 1, **caractérisée en ce que** lesdits éléments d'étagère (103) comprennent, d'un seul côté, une partie saillante (110) permettant d'accrocher ledit chaînon, et une cavité (111) permettant d'accrocher ledit ressort métallique (128).

4. Structure automatisée (10) permettant de stocker et de manipuler des produits selon les revendication 1 et 2, **caractérisée en ce que** lesdits éléments d'étagère (103) s'obtiennent à partir d'une plaque plane provenant d'une simple filière, ladite plaque plane étant alors travaillée pour obtenir, sur la portion arrière dudit élément d'étagère, le chevauchement d'une ou de plusieurs pièces de la plaque, avec une fonction de contrepoids, lesdits éléments d'étagère (103) comprenant en outre, d'un seul côté, une partie saillante permettant d'accrocher ladite tige de métal.

5. Structure automatisée (10) permettant de stocker et de manipuler des produits selon les revendication 1 et 3, **caractérisée en ce qu'**une plaque (104) est montée à l'extérieur de ladite section de canal (100), sensiblement de la même forme et de la même dimension que le côté de ladite section de montage, prévue au niveau de chaque rainure de ladite section avec une fente adéquate (112) pratiquement de forme circulaire et du même diamètre que la fente correspondante (105) placée sur le côté opposé de ladite section, ladite fente particulière comprenant un couple de protubérances en forme de rebroussement, disposées de manière judicieuse pour s'engager dans le tenon placé dans la portion latérale de chaque élément d'étagère et afin de bloquer en position horizontale ledit élément d'étagère dans sa position opérationnelle ladite plaque (104) étant pourvue, sur son bord arrière, d'une série de cavités (113) permettant d'accrocher ledit ressort métallique (.128), en nombre égal par rapport aux cavités d'accrochage correspondantes présentes sur chacun desdits éléments d'étagère (103).

6. Structure automatisée (10) permettant de stocker et de manipuler des produits selon les revendications 1, 2 et 4, **caractérisée en ce qu'**une plaque (104) est montée à l'extérieur de ladite section de canal (100), prévue au niveau de chaque rainure,106) de ladite section de canal (100) d'une rainure opposée capable de former, avec la rainure (106) de ladite section de canal (100), une fente pour l'introduction des tenons (108) présents sur chacun desdits éléments d'étagère (103).

7. Structure automatisée (10) permettant de stocker et de manipuler des produits selon la revendication 6, **caractérisée en ce que** ladite section de canal(100) comprend, pour chacune desdites fentes (105), une douille (170) pour l'introduction des tenons (108) présents sur chacun desdits éléments d'étagère (103).

8. Structure automatisée (10) permettant de stocker et de manipuler des produits selon la revendication 8, **caractérisée en ce que** ladite douille (170) est en acier inoxydable ou autre matériau inoxydable.

9. Structure automatisée (10) permettant de stocker et de manipuler des produits selon la revendication 1, **caractérisée en ce que** ledit chaînon (127) est en acier inoxydable ou autre matériau inoxydable.

10. Structure automatisée (10) permettant de stocker et de manipuler des produits selon les revendications 1 et 2, **caractérisée en ce que** ladite tige de métal (171) est en acier inoxydable ou autre matériau inoxydable.
